(19) Europäisches Patentamt
European Patent Office
Office européen des brevets

(11) **EP 1 615 098 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(51) Int Cl.:
***G06F 1/00*** *(2006.01)*

(21) Anmeldenummer: 05014240.5

(22) Anmeldetag: **30.06.2005**

(54) **Ausspähungsgeschütztes Berechnen eines maskierten Ergebniswertes**

Calculation of a masked value protected against spy out

Calcul d'une valeur masquée protégée contre l'espionnage.

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **07.07.2004 DE 102004032894**

(43) Veröffentlichungstag der Anmeldung:
**11.01.2006 Patentblatt 2006/02**

(73) Patentinhaber: **Giesecke & Devrient GmbH**
**81677 München (DE)**

(72) Erfinder:
• **Neisse, Olaf, Dr.**
**86161 Augsburg (DE)**
• **Pulkus, Jürgen, Dr.**
**80469 München (DE)**

(74) Vertreter: **Dendorfer, Claus et al**
**Dendorfer & Herrmann**
**Patentanwälte Partnerschaft**
**Bayerstrasse 3**
**80335 München (DE)**

(56) Entgegenhaltungen:
**US-A1- 2001 053 220**  **US-A1- 2003 044 003**
**US-A1- 2004 071 288**  **US-B1- 6 295 606**

## EP 1 615 098 B1

**Beschreibung**

Die Erfindung betrifft allgemein das Gebiet der Kryptographie und spezieller das Gebiet des Ausspähungsschutzes von kryptographischen Berechnungen. Besonders eignet sich die Erfindung zur Verwendung bei einem tragbaren Datenträger. Ein solcher tragbarer Datenträger kann z.B. eine Chipkarte *(Smart Card)* in unterschiedlichen Bauformen oder ein Chipmodul oder ein sonstiges ressourcenbeschränktes System sein.

Tragbare Datenträger werden oft für sicherheitskritische Anwendungen eingesetzt, beispielsweise zur Authentisierung im Mobilfunk, für Finanztransaktionen, zur elektronischen Unterschrift und so weiter. Da durch eine unbefugte Verwendung hoher Schaden entstehen könnte, müssen die geheimen Daten, die von solchen Datenträgern verarbeitet werden, zuverlässig vor Ausspähung und Manipulation geschützt werden.

Es sind diverse Angriffsverfahren zur Datenausspähung bekannt, bei denen der Informationsfluß nicht über die für den normalen Betrieb des Datenträ-gers vorgesehenen Kommunikationskanäle verläuft. Solche Verfahren werden daher als Nebenkanalangriffe *(Side Channel Attacks)* bezeichnet. Beispiele für Nebenkanalangriffe sind sogenannte SPA- bzw. DPA-Angriffe (SPA = *Simple Power Analysis;* DPA = *Differential Power Analysis),* bei denen durch Messung der Stromaufnahme des Datenträgers während der Abarbeitung eines Programms Rückschlüsse auf die verarbeiteten Daten gezogen werden. Bei einem SPA-Angriff wird die Stromaufnahme während eines einzigen Berechnungsablaufs untersucht, während bei einem DPA-Angriff viele Berechnungsabläufe statistisch ausgewertet werden. Bei anderen Nebenkanalangriffen wird zusätzlich zum Stromverbrauch oder stattdessen mindestens ein anderer physikalischer Parameter, z.B. die für die Berechnung benötigte Zeit, gemessen und ausgewertet.

Eine bekannte Technik zur Abwehr von Nebenkanalangriffen ist es, die geheim zu haltenden Daten zu maskieren, also derart zu verfälschen, daß die maskierten Daten statistisch unabhängig von den geheim zu haltenden Daten sind. Kryptographische Berechnungen werden dann mit den maskierten Daten durchgeführt. Selbst wenn es einem Angreifer gelingt, z.B. durch einen Nebenkanalangriff die maskierten Daten zu ermitteln, so können daraus keine Rückschlüsse auf die geheim zu haltenden Daten gezogen werden.

Die Maskierung erfolgt durch Anwendung einer Maskierungsfunktion auf die geheim zu haltenden Daten. Meist ist die Maskierungsfunktion aus einer vorbestimmten Maskierungsregel mit mindestens einem Maskierungsparameter gebildet. Der Maskierungsparameter wird vor Beginn der kryptographischen Berechnung zufällig gewählt. So ist z.B. gemäß einem als "boolesche Maskierung" bekannten Verfahren die Maskierungsregel die Exklusiv-Oder-Operation (XOR) mit einem durch den Maskierungsparameter festgelegten Operanden. Die kryptographische Berechnung wird dann nicht mit dem geheim zu haltenden Wert $x$, sondern mit dessen maskierter Repräsentation $x \oplus r$ ausgeführt, wobei $\oplus$ die Exklusiv-Oder-Operation in Infixschreibweise und r den zufällig gewählten Maskierungsparameter bezeichnen.

Die gerade beschriebene Maskierungstechnik ist z.B. aus DE 198 22 217 A1 bekannt. Allerdings wird dort vorgeschlagen, Rechenoperationen, die bezüglich der gewählten Maskierungsfunktion nicht-linear sind, ohne Maskierung mit den geheim zu haltenden Daten durchzuführen. Dies stellt ein potentielles Sicherheitsrisiko dar.

Bei vielen kryptographischen Verfahren sind zu berechnende Abbildungen für unmaskierte Eingangs- und Ergebniswerte durch Tabellen vorgegeben. Aus den oben genannten Gründen soll jedoch insbesondere bei einer Implementierung auf einem tragbaren Datenträger ein Tabellenzugriff mit dem unmaskierten Eingangswert als Tabellenindex vermieden werden. Vielmehr soll auf eine maskierte Tabelle zugegriffen werden, die so ausgestaltet ist, daß sie bei einem Zugriff auf einen maskierten Tabellenindex einen maskierten Ergebniswert liefert.

In Formelschreibweise werden also z.B. bei einer booleschen Maskierung die folgenden Schritte bei jedem Durchlauf des kryptographischen Verfahrens ausgeführt: Zuerst werden zwei Zufallszahlen r und s als Maskierungsparameter bestimmt. Dann wird auf Grundlage der vorgegebenen Tabelle T eine maskierte Tabelle $T'$ erzeugt, so daß $T'(x \oplus r) = T(x) \oplus s$ gilt. In der maskierten Tabelle $T'$ sind also die Eingangswerte mit dem Maskierungsparameter $r$ und die Ergebniswerte mit dem Maskierungsparameter s maskiert. Die kryptographische Berechnung wird so ausgeführt, daß der geheim zu haltende Wert x nicht in unmaskierter Form, sondern in der maskierten Form $x \oplus r$ vorliegt. Statt eines Zugriffs auf die Tabelle T an der Stelle x erfolgt nun ein Zugriff auf die maskierte Tabelle $T'$ an der Stelle x $\oplus$ r. Hierdurch ergibt sich statt eines unmaskierten Ergebnisses $y := T(x)$ der gewünschte, mit dem Maskierungsparameter s maskierte Ergebniswert $y \oplus s$.

Offensichtlich ist es nicht praktikabel, schon bei der Herstellung des Datenträgers für jede später mögliche Maskierung - im obigen Beispiel alle möglichen Maskierungsparameter r und s - vorab je eine eigene maskierte Tabelle $T'$ zu berechnen und in einem Festwertspeicher des Datenträgers abzulegen. Die maskierte Tabelle $T'$ kann daher erst zur Laufzeit des kryptographischen Verfahrens für eine konkret anzuwendende Maskierung - im obigen Beispiel bereits gewählte Maskierungsparameter r und s - berechnet und in einen Arbeitsspeicher des Datenträgers eingeschrieben werden.

Hierbei ergibt sich jedoch das Problem eines relativ hohen Arbeitsspeicherbedarfs. Bei üblichen tragbaren Datenträgern der Arbeitsspeicher meist sehr knapp bemessen, weil der in der Regel als RAM ausgestaltete Arbeitsspeicher viel Chipfläche pro Speicherzelle benötigt. Wenn z.B. eine Tabelle mit 256 Einträgen zu je einem Byte als maskierte Tabelle T' in den Arbeitsspeicher geschrieben werden soll, werden dafür 256 Byte benötigt. Dies ist mehr, als manche heute üblichen Datenträger an Arbeitsspeicher bereitstellen, und auf jeden Fall ein beträchtlicher Teil des insgesamt zur Verfügung stehenden Arbeitsspeichers, der ja noch für viele andere Zwecke benötigt wird. Es besteht daher ein Bedürfnis, den für die maskierte Tabelle benötigten Platz im Arbeitsspeicher zu verringern.

Aus WO 03/017067 A2 ist ein Verfahren bekannt, bei dem aus zwei gleich großen unmaskierten Tabellen eine gemeinsame maskierte Tabelle mit der Größe einer unmaskierten Tabelle erzeugt wird. Jeder Eintrag der gemeinsamen Tabelle wird in Abhängigkeit von einer Verknüpfung zweier Ergebniswerte der unmaskierten Tabellen berechnet. Um einen maskierten Ergebniswert gemäß der durch eine der unmaskierten Tabellen definierten Abbildung zu bestimmen, erfolgt ein Zugriff auf die maskierte Tabelle, dessen Ergebnis mit dem Ergebnis eines Zugriffs auf die andere unmaskierte Tabelle verknüpft wird, um die bei der Berechnung der maskierten Tabelle vorgenommene Verknüpfung rückgängig zu machen.

In Formelschreibweise wird somit gemäß WO 03/017067 A2 für die im Festwertspeicher vorgegebenen Tabellen $T_1$ und $T_2$ und drei Maskierungsparameter $r_1$, $r_2$ und s die maskierte Tabelle $T_0$ mit $T_0(x) := T_1(x \oplus r_1) \oplus T_2(x \oplus r_2) \oplus s$ berechnet und im Arbeitsspeicher abgelegt. Für einen maskierten Eingangswert $x_1 := x \oplus r_1$ wird der maskierte Ergebniswert $y_1 := T_1(x) \oplus s_1$ dann durch Auswertung der Gleichung $y_1 = T_0(x_1) \oplus T_2(x_1 \oplus (r_1 \oplus r_2)) \oplus (s \oplus s_1)$ berechnet; dies entspricht im unmaskierten Fall der Anwendung der durch die Tabelle $T_1$ definierten Abbildung. Die Anwendung der durch die Tabelle $T_2$ definierten Abbildung erfolgt analog.

Durch die in WO 03/017067 A2 offenbarte Technik kann somit der im Arbeitsspeicher benötigte Speicherplatz halbiert oder - bei mehrmaliger Anwendung des Verfahrens - auf einen Zweierpotenz-Bruchteil verringert werden. Ferner lehrt WO 03/017067 A2 die Aufteilung einer großen vorgegebenen Tabelle in zwei kleinere Tabellen, die dann auf die oben beschriebene Weise in einer maskierten RAM-Tabelle übereinandergelegt werden.

Die Erfindung hat die Aufgabe, eine Technik zum ausspähungsgesicherten Berechnen von maskierten Werten gemäß einer vorgegebenen Abbildung zu schaffen, die bei hohem Ausspähungsschutz nur wenig Arbeitsspeicher benötigt. Insbesondere soll sich die Erfindung zur Anwendung bei tragbaren Datenträgern eignen.

Erfindungsgemäß wird diese Aufgabe gelöst durch ein Verfahren mit den Merkmalen des Anspruchs 1, ein Computerprogrammprodukt gemäß Anspruch 14 und eine Vorrichtung, insbesondere einen tragbaren Datenträger, gemäß Anspruch 15. Die abhängigen Ansprüche betreffen bevorzugte Ausgestaltungen der Erfindung.

Die Erfindung geht von der Grundüberlegung aus, bei der Berechnung jedes Eintrags in der maskierten Tabelle alle vorgegebenen Abbildungen hintereinanderzuschalten. Mit anderen Worten wird bei der Berechnung jedes Eintrags in der maskierten Tabelle zumindest ein Eingangswert einer der vorgegebenen Abbildungen in Abhängigkeit von mindestens einem Ergebniswert einer anderen der vorgegebenen Abbildungen bestimmt. Diese Operation benötigt keine oder kaum zusätzliche Rechenzeit; sie erhöht jedoch die Komplexität des Verfahrens und macht es damit besonders ausspähungssicher.

Die Abbildungen können wahlweise direkt hintereinandergeschaltet sein oder indirekt, nämlich über je mindestens eine Ummaskierung - also eine die bestehende Maskierungsart ändernde Abbildung oder Rechenvorschrift - hintereinandergeschaltet sein.

In bevorzugten Ausgestaltungen der Erfindung wird bei der Berechnung des maskierten Ergebniswerts die mindestens eine weitere Abbildung in einer Richtung ausgewertet, die gegenüber der Richtung bei der Berechnung des Eintrags in der maskierten Tabelle umgekehrt ist. Hierdurch kann die Anwendung dieser weiteren Abbildung, die bei der Berechnung des herangezogenen Tabelleneintrags stattgefunden hat, rückgängig gemacht werden. Vorzugsweise werden auch Maskierungen, die bei der Berechnung der maskierten Tabelle angewendet wurden, wieder herausgerechnet.

Die erste vorgegebene Abbildung, durch die im nicht maskierten Fall der zu berechnende Ergebniswert definiert ist, wird in bevorzugten Ausführungsformen bei der Berechnung des maskierten Ergebniswerts gerade nicht ausgewertet. Indirekt fließt die erste vorgegebene Abbildung natürlich in den Ergebniswert ein, und zwar über die maskierte Tabelle. Vorzugsweise sind die Abbildungen für unmaskierte Eingangs- und Ergebniswerte vorgegeben; es können jedoch auch maskierte vorgegebene Abbildungen - z.B. maskiert durch eine vorbestimmte, gleichbleibende Maskierungsfunktion - eingesetzt werden.

In vorteilhaften Ausgestaltungen sind die vorgegebenen Abbildungen und/oder Umkehrungen davon zumindest teilweise durch je eine in einem Festwertspeicher befindliche Tabelle definiert. Diese Tabellen sind vorzugsweise eineindeutig. Um dies zu erzielen, können in manchen Ausgestaltungen Leerdaten (*padding*) vorgesehen sein. Die maskierte Tabelle wird vorzugsweise in einen Arbeitsspeicher eingeschrieben.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, z.B. ein Halbleiterspeicher oder eine Diskette oder eine CD-ROM. Das Computerprogrammprodukt kann jedoch auch ein nichtkörperliches Medium sein, z.B. ein über ein Computernetzwerk übermitteltes Signal. Insbesondere kann das Computerprogrammprodukt Programmbefehle enthalten, die im Zuge der Herstellung oder der Initialisierung oder der Personalisierung eines tragbaren Datenträgers in diesen eingebracht werden.

Die erfindungsgemäße Vorrichtung kann insbesondere ein tragbarer Datenträger, z.B. eine Chipkarte oder ein Chipmodul, sein.

In bevorzugten Weiterbildungen weisen das Computerprogrammprodukt und/oder die Vorrichtung Merkmale auf, die den in der vorliegenden Beschreibung erwähnten und/oder den in den abhängigen Verfahrensansprüchen genannten Merkmalen entsprechen.

Weitere Merkmale, Aufgaben und Vorteile der Erfindung ergeben sich aus der folgenden Beschreibung mehrerer Ausführungsbeispiele und Ausführungsalternativen. Es wird auf die schematischen Zeichnungen verwiesen, in denen zeigen:

Fig. 1 eine Übersicht mit Funktionseinheiten eines tragbaren Datenträgers und Datenstrukturen nach einem Ausführungsbeispiel der Erfindung,

Fig. 2 eine beispielhafte Darstellung von Berechnungsschritten beim Erzeugen einer maskierten Tabelle, und

Fig. 3 eine beispielhafte Darstellung von Berechnungsschritten beim Ermitteln eines maskierten Ergebniswerts.

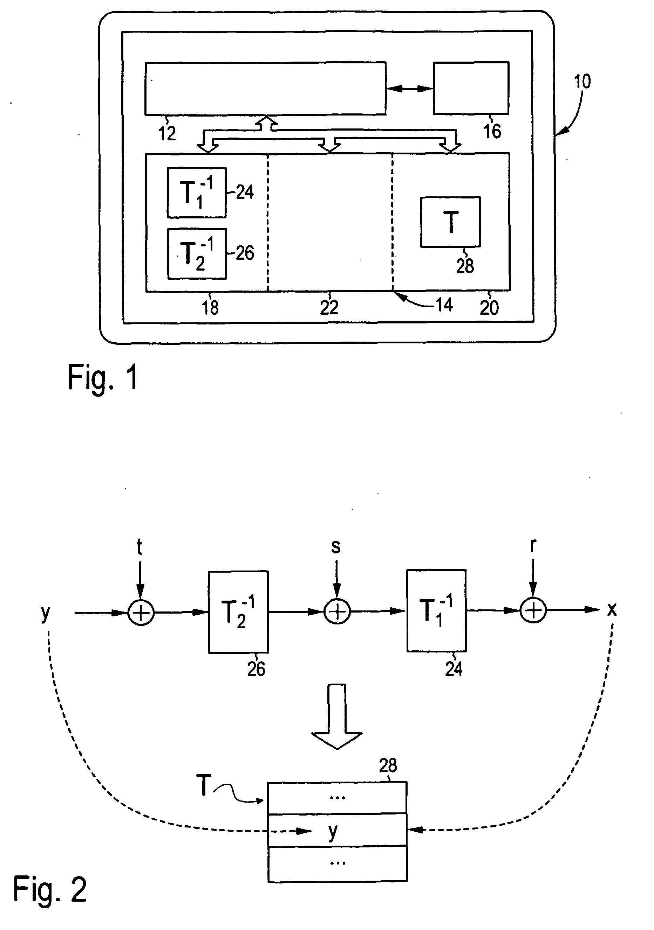

Der in Fig. 1 schematisch dargestellte Datenträger 10 ist im vorliegenden Ausführungsbeispiel als Chipkarte (*Smart Card*) oder Chipmodul - z.B. als SIM (*Subscriber Identity Module*) für ein Mobiltelekommunikationsgerät - ausgebildet. Der Datenträger 10 weist einen Prozessor 12, einen Speicher 14 und eine Schnittstellenschaltung 16 zur kontaktlosen oder kontaktgebundenen Kommunikation mit einem externen Terminal (nicht gezeigt) auf.

In an sich bekannter Weise ist der Speicher 14 in mehrere Speicherbereiche unterteilt, die in unterschiedlichen Technologien ausgestaltet sind. Im hier beschriebenen Ausführungsbeispiel sind ein als maskenprogrammiertes ROM ausgestalteter Festwertspeicher 18 und ein als flüchtiges RAM ausgestalteter Arbeitsspeicher 20 vorhanden. Ferner weist der Datenträger 10 einen nichtflüchtigen überschreibbaren Speicher 22 auf, der beispielsweise ein EEPROM oder ein Flash-EEPROM oder ein ferroelektrischer Speicher (FRAM) sein kann. In Ausführungsalternativen können auch der Festwertspeicher 18 und/oder der Arbeitsspeicher 20 ganz oder zum Teil in EEPROM- und/oder Flash-EEPROM- und/oder FRAM-Technologien ausgestaltet sein.

Die im folgenden beschriebenen Verfahren werden von dem Prozessor 12 des Datenträgers 10 ausgeführt. Die Verfahren sind dazu in Form von Programmbefehlen (nicht gezeigt) implementiert, die im Festwertspeicher 18 und/oder dem nichtflüchtigen überschreibbaren Speicher 22 enthalten sind.

Im vorliegenden Ausführungsbeispiel enthält der Festwertspeicher 18 zwei Tabellen 24, 26 mit z.B. je 256 Einträgen zu je 1 Byte. Diese Tabellen 24, 26 sind aus vorgegebenen Abbildungen abgeleitet, die z.B. für kryptographische Verfahren benötigt werden. Genauer gesagt, entsprechen die Tabellen 24, 26 im vorliegenden Ausführungsbeispiel den Umkehrungen der vorgegebenen Abbildungen. Im Betrieb des Datenträgers 10 wird aus den Tabellen 24, 26 eine weitere Tabelle T 28 berechnet und in den Arbeitsspeicher 20 eingeschrieben. Diese Tabelle T 28 weist die gleiche Größe wie jede der Tabellen 24, 26, im vorliegenden Beispiel also 256 Byte, auf. Einzelheiten der Berechnung und Nutzung der Tabelle T 28 werden im folgenden erläutert.

Fig. 2, Fig. 3 und Fig. 4 veranschaulichen ein besonders einfaches Ausführungsbeispiel des erfindungsgemäßen Ablaufs. Es sind hier Abbildungen $T_1$ und $T_2$ vorgegeben, deren Eingangs- und Ergebniswerte je $b$ Bit aufweisen. Mit anderen Worten sind die Abbildungen $T_1$ und $T_2$ für alle Werte x im Bereich $0 \leq x < 2^b$ definiert und liefern Ergebnisse im gleichen Bereich. Ferner wird vorausgesetzt, daß die Abbildungen $T_1$ und $T_2$ ein-eindeutig sind, also daß jede Abbildung $T_1$ und $T_2$ eine Permutation auf der Menge $\{0, 1, ..., 2^b\text{-}1\}$ darstellt. Diese Bedingung wird von Abbildungen, die für kryptographische Verfahren eingesetzt werden, häufig erfüllt.

Wegen ihrer Ein-Eindeutigkeit sind die Abbildungen $T_1$ und $T_2$ umkehrbar; es gibt also Umkehrfunktionen $T_1^{-1}$ und $T_2^{-1}$ mit $x = T_i(T_i^{-1}(x)) = T_i^{-1}(T_i(x))$ für alle $x \in \{0, 1, ..., 2^b\text{-}1\}$ und $i = 1, 2$. Diese Umkehrfunktionen $T_1^{-1}$ und $T_2^{-1}$ werden im vorliegenden Ausführungsbeispiel durch die im Festwertspeicher 18 befindlichen Tabellen 24, 26 mit je $2^b$ Einträgen zu je b Bit definiert. In Ausführungsalternativen können jedoch im Festwertspeicher 18 auch Rechenvorschriften enthalten sein, die die Umkehrfunktionen $T_1^{-1}$ und $T_2^{-1}$ implementieren. Solche Rechenvorschriften können sich ihrerseits auf Tabellen abstützen.

Die Tabellen 24, 26 weisen keine Maskierung auf. Daher könnte auf die Tabellen 24, 26 allenfalls mit einem unmaskierten Wert x als Tabellenindex zugegriffen werden. Dies soll jedoch aus Gründen des Ausspähungsschutzes vermieden werden, weil sonst ein Angreifer möglicherweise Informationen über den geheim zu haltenden Wert x ermitteln könnte. Es soll daher ein kryptographisch sicheres Verfahren implementiert werden, durch das sich die Abbildungen $T_1$ und $T_2$ für maskierte Eingangswerte $x_1$, $x_2$ berechnen lassen, wodurch maskierte Ergebniswerte $y_1$ $y_2$ erzielt werden.

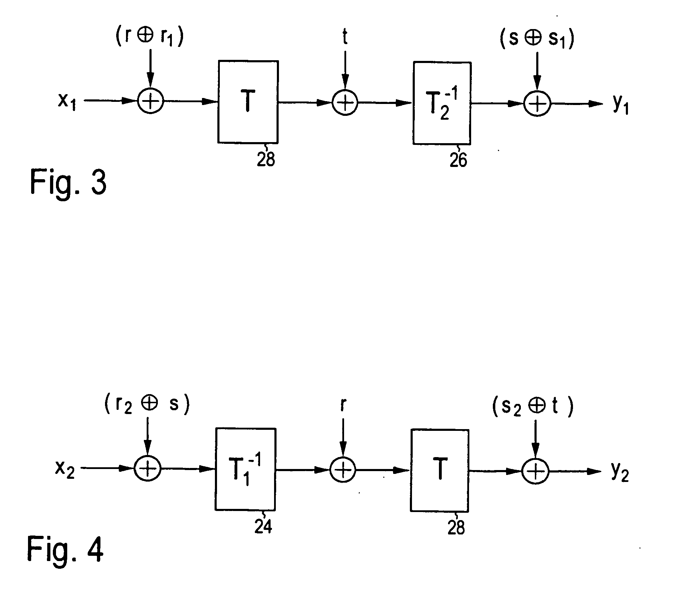

Das hier beschriebene Verfahren besteht aus zwei Stufen. In einer vorbereitenden Stufe, die in Fig. 2 veranschaulicht ist, werden Maskierungsparameter erzeugt und die Tabelle T 28 in einer gemäß diesen Parametern berechneten Maskierung im Festwertspeicher 20 angelegt. In einer zweiten Stufe wird entweder ein maskierter Ergebniswert $y_1$ durch je einen Zugriff auf die Tabellen 28 und 26 oder ein maskierter Ergebniswert $y_2$ durch je einen Zugriff auf die Tabellen 28 und 24 berechnet. Die erstgenannte Variante ist in Fig. 3 veranschaulicht. Diese zweite Stufe kann in beiden Varianten beliebig oft wiederholt werden. Je nach den an die kryptographische Sicherheit gestellten Anforderungen ist jedoch in der Regel vorgesehen, die maskierte Tabelle T 28 nur einige wenige Male - z.B. für einen einzigen Durchlauf eines kryptographischen Verfahrens - zu verwenden und die maskierte Tabelle T 28 dann mit anderen Maskierungsparametern neu zu berechnen.

Zur Berechnung der maskierten Tabelle T 28 werden zunächst voneinander unabhängige, gleichverteilte Zufallszahlen $r$, $s$, $t \in \{0, 1, ..., 2^b\text{-}1\}$ als Maskierungsparameter gewählt. Dann wird die Tabelle T 28 derart berechnet, daß für die Tabelleneinträge y an allen Indexpositionen $x \in \{0, 1, ..., 2^b\text{-}1\}$ gilt:

$$T(x) := y \quad \text{mit} \quad y = T_2(T_1(x \oplus r) \oplus s) \oplus t \qquad (1)$$

In der Implementierung auf dem Datenträger 10 kann Definition (1) nur dann unmittelbar zur Berechnung der Tabelleneinträge T(x) herangezogen werden, wenn die Abbildungen $T_1$ und $T_2$ zusätzlich zu den Tabellen 24, 26 zur Verfügung stehen. Dies ist meist nicht der Fall. Es wird daher die folgende, aus Definition (1) abgeleitete Gleichung benutzt:

$$T(x) := y \quad \text{mit} \quad x = T_1^{-1}(T_2^{-1}(T(x) \oplus t) \oplus s) \oplus r \qquad (2)$$

Zur Berechnung der Tabelle T 28 kann z.B. in einer Programmschleife der Wert von y von 0 bis $2^b\text{-}1$ hochgezählt werden. Durch Auswerten der Gleichung (2) kann dann für jeden Wert von y ermittelt werden, an welche Indexposition x dieser Wert in den für die Tabelle T 28 vorgesehenen Speicherbereich im Arbeitsspeicher 20 geschrieben werden soll.
Nachdem die Tabelle T 28 berechnet worden ist, können in der zweiten Verfahrensstufe die Abbildungen $T_1$ und $T_2$ mit maskierten Eingangs- und Ergebniswerten ausgewertet werden. Fig. 3 stellt die Auswertung der Abbildung $T_1$ mit einem maskierten Eingangswert $x_1 := x \oplus r_1$ dar, wobei ein maskierter Ergebniswert $y_1 := T_1(x) \oplus s_1$ berechnet werden soll. Die Maskierung des Eingangs- bzw. des Ergebniswerts ist somit durch die Maskierungsparameter $r_1$ und $s_1$ gegeben; diese Maskierungsparameter werden im Zuge der Ausführung des kryptographischen Verfahrens als unabhängige, gleichverteilte Zufallszahlen im Bereich $r_1$, $s_1 \in \{0, 1, ..., 2^b\text{-}1\}$ bestimmt. Der maskierte Ergebniswert $y_1$ wird dann gemäß der folgenden Gleichung ermittelt:

$$y_1 = T_2^{-1}(T(x_1 \oplus (r \oplus r_1)) \oplus t) \oplus (s \oplus s_1) \qquad (3)$$

Obwohl in Gleichung (3) die Abbildung $T_1$ berechnet wird, erfolgt gerade kein Zugriff auf die Tabelle 24, die die Umkehrfunktion $T_1^{-1}$ definiert. Ferner sind alle bei der Berechnung gemäß Fig. 3 entstehenden Zwischenergebnisse wegen der zusätzlichen Maskierungen unabhängig von den unmaskierten Werten x und y. Selbst wenn es einem Angreifer gelingen würde, z.B. durch einen Nebenkanalangriff den Berechnungsablauf von Fig. 3 und die diversen Zwischenergebnisse auszuspähen, könnte der Angreifer daraus keine Informationen über die geheim zu haltenden Werte x und y gewinnen.
Die Berechnung der Abbildung $T_2$ erfolgt analog. Hier sei ein maskierter Eingangswert $x_2 := x \oplus r_2$ gegeben, und es sei ein maskierter Ergebniswert $y_2 := T_2(x) \oplus s_2$ zu berechnen. Wieder sind die Maskierungsparameter $r_2$ und $s_2$ unabhängige, gleichverteilte Zufallszahlen im Bereich $r_2$, $s_2 \in \{0, 1, ..., 2^b\text{-}1\}$. Es wird dann die folgende Gleichung ausgewertet:

$$y_2 = T(T_1^{-1}(x_2 \oplus (s \oplus r_2)) \oplus r) \oplus (t \oplus s_2) \qquad (4)$$

Das bislang beschriebene Ausführungsbeispiel ist wegen der diversen Ummaskierungen (d.h. Maskierungsänderungen) zumindest für kryptographische Verfahren, bei denen eine boolesche Maskierung eingesetzt wird, allgemein verwendbar. Insbesondere können bei den Tabellenzugriffen andere Maskierungsparameter als beim Berechnen der Tabelle T 28 herangezogen werden.
In Ausführungsalternativen wird die Tabelle T 28 gezielt für Maskierungsparameter berechnet, die auch in der zweiten Verfahrensstufe - also beim Auswerten der vorgegebenen Abbildungen $T_1$ und $T_2$ - verwendet werden. Es gilt

dann $r = r_1$ und/oder $t = s_2$. Alternativ oder zusätzlich kann auch die Ummaskierung bei Berechnungen, in denen die Abbildungen $T_1$ und $T_2$ nacheinander angewendet werden, vereinfacht werden oder entfallen. Es wird dann entweder $s = s_1 \oplus r_2$ gesetzt, falls $s_1 \neq r_2$ gilt, oder es wird $s = s_1 = r_2$ gewählt. In allen genannten Alternativen sind die resultieren Zwischenergebnisse unabhängig von den geheim zu haltenden Werten x und y. Der Vorteil dieser Alternativen ist der geringere Rechenaufwand für eine einzelne Auswertung; allerdings muß möglicherweise häufiger eine neue Tabelle T 28 berechnet werden.

Die bisher beschriebenen Ausführungsbeispiele gingen von einer booleschen Maskierung, also einer XOR-Verknüpfung mit einem konstanten Maskie-rungsparameter, aus. In Ausführungsalternativen können jedoch auch andere Maskierungsregeln verwendet werden. Solche an sich bekannte Maskierungsregeln sind z.B. die modulare Addition, die modulare Subtraktion, die modulare Multiplikation, die für den IDEA-Algorithmus (*International Data Encryption Algorithm*) verwendete, modifizierte Multiplikation und allgemein affine Abbildungen. Die modulare Addition mit einem konstanten Summanden als Maskierungsparameter ist auch als "arithmetische Maskierung" bekannt. Der bei der arithmetischen Maskierung verwendete Modul kann z.B. eine Zweierpotenz - oft $2^8$ oder $2^{16}$ oder $2^{32}$ - oder der Wert $2^{16} + 1$ sein; letzterer wird auch für die IDEA-Multiplikation verwendet.

In einer allgemeinen Formulierung der bislang konkreter angegebenen Ausführungsbeispiele werden als Maskierungen beliebige Permutationen $\rho_i$, $\sigma_i$ auf der Menge $\{0, 1, ..., 2^b-1\}$ für $i = 1, 2$ betrachtet. Die Permutationen $\rho_i$ dienen hierbei zur Maskierung von Eingangswerten, während die Ergebniswerte durch die Permutationen $\sigma_i$ maskiert werden. Wenn die Permutationen $\rho_i$, $\sigma_i$ vorliegen, kann die Tabelle T 28 im Arbeitsspeicher 20 mittels der folgenden Definition der Tabelleneinträge T(x) für alle $x \in \{0, 1, ..., 2^b-1\}$ berechnet werden; diese Definition stellt eine Verallgemeinerung der Definition (1) dar:

$$T(x) := \sigma_2(T_2(\rho_2^{-1}(\sigma_1(T_1(\rho_1^{-1}(x)))))) \tag{5}$$

Um aus dem mit der Permutation $\rho_1$ maskierten Eingangswert $x_1 := \rho_1(x)$ den mit der Permutation $\sigma_1$ maskierten Ergebniswert $y_1 := \sigma_1(T_1(x))$ zu erhalten, wird die folgende Gleichung ausgewertet, die eine Verallgemeinerung von Gleichung (3) darstellt:

$$y_1 = \rho_2(T_2^{-1}(\sigma_2^{-1}(T(x_1)))) \tag{6}$$

Entsprechend erfolgt die Berechung von $y_2 := \sigma_2(T_2(x))$ aus $x_2 := \rho_2(x)$ durch die folgende Gleichung:

$$y_2 = T(\rho_1(T_1^{-1}(\sigma_1^{-1}(x_2)))) \tag{7}$$

In der gerade dargestellten Verallgemeinerung gemäß den Gleichungen (5) - (7) müssen die beiden Maskierungen $\rho_2$ und $\sigma_1$ voneinander unabhängig sein. In Ausführungsalternativen kann jedoch der für die Ummaskierung (Maskierungsänderung zwischen den hintereinandergeschalteten Abbildungen) erforderliche Aufwand verringert werden, indem $\rho_2 = \sigma_1$ gewählt wird und statt der Gleichungen (5) - (7) die folgenden Gleichungen (8) - (10) herangezogen werden; die Definition (8) gelte für alle $x \in \{0, 1, ..., 2^b-1\}$:

$$T(x) := \sigma_2(T_2(\sigma_1(T_1(\rho_1^{-1}(x))))) \tag{8}$$

$$y_1 = T_2^{-1}(\sigma_2^{-1}(T(x_1))) \tag{9}$$

$$y_2 = T(\rho_1(T_1^{-1}(x_2))) \tag{10}$$

Voraussetzung für die Verwendbarkeit der Ausführungsalternative gemäß den Gleichungen (8) - (10) ist jedoch, daß die Maskierung $\rho_2 = \sigma_1$ selbstinvers ist, also daß $\rho_2 = \rho_2^{-1}$ - und damit gleichbedeutend $\sigma_1 = \sigma_1^{-1}$ - gilt. Diese Voraussetzung ist z.B. bei einer booleschen Maskierung stets erfüllt, nicht jedoch z.B. bei einer arithmetischen Maskierung. Gegebenenfalls muß hier eine zusätzliche unabhängige Maskierung eingeführt und ummaskiert werden.

Bei allen bisher beschriebenen Ausführungsbeispielen wurden als vorgegebene Abbildungen $T_1$ und $T_2$ Permutationen auf der Menge $\{0, 1, ..., 2^b-1\}$ vorausgesetzt. Solche Permutationen können durch das kryptographische Verfahren unmittelbar vorgegeben sein. Ausführungsalternativen der Erfindung können jedoch auch im Zusammenhang mit kryptographischen Verfahren eingesetzt werden, bei denen Tabellen mit $2^b$ Einträgen zu je b' Bit vorgesehen sind, wobei $b' < b$ gilt und jeder Eintrag in jeder Tabelle gleich oft vorkommt. Die genannten Bedingungen sind aus Sicherheitsgründen bei vielen kryptographischen Verfahren erfüllt, wie z.B. bei den S-Boxen des DES-Algorithmus (*Data Encryption Standard*), die je $2^6$ Einträge zu je 4 Bit aufweisen.

In den genannten Ausführungsalternativen wird jede Tabelle mit b' Bit Nutzdaten pro Eintrag zufällig oder systematisch mit je b - b' Bit Leerdaten (*padding*) pro Wort auf eine Wortbreite von b Bit aufgefüllt, so daß sich eine erweiterte Tabelle mit $2^b$ Einträgen zu je $b$ Bit ergibt und jeder $b$ Bit breite Eintrag in der erweiterten Tabelle genau einmal vorkommt. Die erweiterte Tabelle ist dann ein-eindeutig und kann in allen oben beschriebenen Ausführungsbeispielen verwendet werden. In weiteren Ausgestaltungen werden mehrere vorgegebene Tabellen zu einer ein-eindeutigen Tabelle mit $2^b$ Einträgen zu je $b$ Bit zusammengefaßt. Auch hier können, falls erforderlich, Leerdaten eingefügt werden, um die Umkehrbarkeit sicherzustellen. Alternativ oder zusätzlich können solche Leerdaten auch dazu dienen, die Größen zweier vorgegebener Tabellen aneinander anzugleichen.

Die Abbildungen $T_1$, $T_2$ bzw. deren Umkehrfunktionen $T_1^{-1}$, $T_2^{-1}$ sind in vielen Ausgestaltungen der Erfindung als Tabellen - wie z.B. die Tabellen 24, 26 - vorgegeben. In Ausführungsalternativen können dagegen Berechnungsvorschriften im Festwertspeicher 18 enthalten sein, die die Abbildungen $T_1$, $T_2$ und/oder $T_1^{-1}$, $T_2^{-1}$ zumindest zum Teil implementieren. Dies kann insbesondere bei relativ einfach zu berechnenden Abbildungen sinnvoll sein, z.B. bei Abbildungen, die im Zusammenhang mit Maskierungsregelübergängen eingesetzt werden. Auf die kryptographische Sicherheit der Berechnungsvorschriften braucht nicht oder kaum geachtet zu werden.

Berechnungsvorschriften, die die Abbildungen $T_1$, $T_2$ und/oder $T_1^{-1}$, $T_2^{-1}$ implementieren, können sich ihrerseits auf Tabellen abstützen. Insbesondere kann ein tabellenbasiertes Berechnungsverfahren eingesetzt werden. Ein solches Verfahren kann z.B. das Verfahren der vorliegenden Erfindung sein, das rekursiv aufgerufen werden kann, um den Platzbedarf im Arbeitsspeicher 20 auf ein Viertel, ein Achtel, ... zu verringern. Andere einsetzbare Verfahren sind in der Parallelanmeldung der gleichen Erfinder mit dem gleichen Anmeldetag und Titel (veröffentlicht als DE 10 2004 032 893 A1) sowie in WO 03/ 017067 A2 beschrieben.

In der bisherigen Beschreibung wurde aus Gründen der klareren Darstellung nur der Fall zweier vorgegebener Abbildungen $T_1$, $T_2$ ausdrücklich erwähnt, die zu einer Tabelle T 28 im Arbeitsspeicher 20 zusammengefaßt werden sollten. Es versteht sich, daß das Verfahren auch auf drei oder mehr vorgegebene Abbildungen $T_i$, $i = 1, 2, ..., n$, angewandt werden kann. Die obigen Gleichungen sind dann auf eine für den Fachmann offensichtliche Weise anzupassen. Der Platzbedarf im Arbeitsspeicher 20 verringert sich - verglichen mit dem Platzbedarf aller unmaskierter Tabellen im Festwertspeicher 18 - auf $1/n$. Allerdings steigt der Rechenaufwand, so daß eine sinnvolle Abwägung getroffen werden muß.

Die oben beschriebenen Einzelheiten sollen nicht als Einschränkungen des Schutzbereichs der Erfindung aufgefaßt werden, sondern vielmehr als Beispiele von bevorzugten Ausführungsformen dienen. Viele andere Abwandlungen sind möglich und für den Fachmann offensichtlich. Der Bereich der Erfindung soll deshalb nicht durch die dargestellten Ausführungsbeispiele bestimmt werden, sondern durch die Ansprüche und ihre Äquivalente.

**Patentansprüche**

1. Verfahren zum ausspähungsgeschützten Berechnen eines maskierten Ergebniswertes ($y_1$; $y_2$) aus einem maskierten Eingangswert ($x_1$; $x_2$) gemäß einer vorgegebenen ersten Abbildung ($T_1$; $T_2$), wobei mindestens eine weitere Abbildung ($T_2$; $T_1$) vorgegebene ist, mit den Schritten:

   - Berechnen einer maskierten Tabelle ($T(28)$), wobei in jeden Tabelleneintrag alle vorgegebenen Abbildungen ($T_1$, $T_2$; $T_2$, $T_1$) eingehen, und
   - Berechnen des maskierten Ergebniswerts ($y_1$; $y_2$), wobei die maskierte Tabelle (T (28)) und die mindestens eine weitere Abbildung ($T_2$; $T_1$) ausgewertet werden,
   **dadurch gekennzeichnet, daß**
   - bei der Berechnung jedes Eintrags ($y =: T(x)$) in der maskierten Tabelle ($T(28)$) zumindest ein Eingangswert einer der vorgegebenen Abbildungen ($T_1$; $T_2$) in Abhängigkeit von mindestens einem Ergebniswert einer anderen der vorgegebenen Abbildungen ($T_2$; $T_1$) bestimmt wird.

2.  Verfahren nach Anspruch 1, **dadurch gekennzeichnet, daß** bei der Berechnung jedes Eintrags ($y$) in der maskierten Tabelle ($T$ (28)) alle vorgegebenen Abbildungen ($T_1$, $T_2$) hintereinandergeschaltet werden.

3.  Verfahren nach Anspruch 1 oder Anspruch 2, **dadurch gekennzeichnet, daß** bei der Berechnung des maskierten Ergebniswerts ($y_1$; $y_2$) die mindestens eine weitere Abbildung ($T_2$; $T_1$) in einer gegenüber der Berechnung des herangezogenen Eintrags der maskierten Tabelle ($T$ (28)) umgekehrten Richtung ($T_2^{-1}$; $T_1^{-1}$) ausgewertet wird, um die Anwendung dieser Abbildung ($T_2$; $T_1$) bei der Berechnung dieses Tabelleneintrags rückgängig zu machen.

4.  Verfahren nach Anspruch 3, **dadurch gekennzeichnet, daß** bei der Berechnung des maskierten Ergebniswerts ($y_1$; $y_2$) die erste vorgegebene Abbildung ($T_1$; $T_2$) nicht ausgewertet wird.

5.  Verfahren nach einem der Ansprüche 1 bis 4, **dadurch gekennzeichnet, daß** die vorgegebenen Abbildungen ($T_1$, $T_2$) für unmaskierte Eingangs- und Ergebniswerte vorgegeben sind.

6.  Verfahren nach einem der Ansprüche 1 bis 5, **dadurch gekennzeichnet, daß** die vorgegebenen Abbildungen ($T_1$, $T_2$) umkehrbar sind.

7.  Verfahren nach Anspruch 6, **dadurch gekennzeichnet, daß** Umkehrungen ($T_2^{-1}$; $T_1^{-1}$) der vorgegebenen Abbildungen ($T_1$, $T_2$) zumindest teilweise durch je eine in einem Festwertspeicher (18) befindliche Tabelle (24, 26) definiert sind.

8.  Verfahren nach Anspruch 7, **dadurch gekennzeichnet, daß** mindestens eine der Tabellen (24, 26) Leerdaten *(padding)* aufweist.

9.  Verfahren nach einem der Ansprüche 1 bis 8, **dadurch gekennzeichnet, daß** die maskierte Tabelle (T (28)) in einen Arbeitsspeicher (20) eingeschrieben wird.

10. Verfahren nach einem der Ansprüche 1 bis 9, **dadurch gekennzeichnet, daß** das Verfahren dazu eingerichtet ist, von einem Prozessor (12) eines tragbaren Datenträgers (10) ausgeführt zu werden.

11. Verfahren nach einem der Ansprüche 1 bis 10, **dadurch gekennzeichnet, daß** das Verfahren zum Schutz gegen eine Datenausspähung durch Nebenkanalangriffe (*Side Channel Attacks*) dient.

12. Verfahren nach einem der Ansprüche 1 bis 11, **dadurch gekennzeichnet, daß** die Berechnung der Einträge (y=: $T$(x)) in der maskierten Tabelle ($T$(28)) für alle zulässigen Indexwerte ($x$) der maskierten Tabelle ($T$(28)) und für vorgegebene Permutationen ($\rho i$, $\sigma i$) zur Maskierung von Eingangswerten bzw. Ergebniswerten gemäß einer der folgenden Gleichungen erfolgt:

$$T(x) := y \quad \text{mit} \quad y = \sigma_2(T_2(\rho_2^{-1}(\sigma_1(T_1(\rho_1^{-1}(x))))))$$

und/oder

$$T(x) := y \quad \text{mit} \quad y = \sigma_2(T_2(\sigma_1(T_1(\rho_1^{-1}(x))))).$$

13. Verfahren nach Anspruch 12, **dadurch gekennzeichnet, daß** die Berechnung des maskierten Ergebniswerts ($y_1$; $y_2$) aus dem maskierten Eingangswert ($x_1$; $x_2$) gemäß einer der folgenden Gleichungen erfolgt:

$$y_1 = \rho_2(T_2^{-1}(\sigma_2^{-1}(T(x_1))))$$

und/oder

$$y_2 = T(\rho_1(T_1^{-1}(\sigma_1^{-1}(x_2))))$$

und/oder

$$y_1 = T_2^{-1}(\sigma_2^{-1}(T(x_1)))$$

und/oder

$$y_2 = T(\rho_1(T_1^{-1}(x_2))) .$$

14. Computerprogrammprodukt mit einer Vielzahl von Programmbefehlen, die mindestens einen Prozessor (12) dazu veranlassen, ein Verfahren nach einem der Ansprüche 1 bis 13 auszuführen.

15. Vorrichtung, insbesondere tragbarer Datenträger (10), mit mindestens einem Prozessor (12) und mindestens einem Speicher (14), wobei die Vorrichtung dazu eingerichtet ist, ein Verfahren nach einem der Ansprüche 1 bis 13 auszuführen.

**Claims**

1. Method for the spy-out protected computation of a masked result value ($y_1$; $y_2$) from a masked input value ($x_1$; $x_2$) according to a predefined first map ($T_1$; $T_2$), wherein at least one other map ($T_2$; $T_1$) is predefined, comprising the steps of:

   - computing a masked table ($T$(28)), wherein all predefined maps ($T_1$, $T_2$; $T_2$, $T_1$) are included in each table entry, and
   - computing the masked result value ($y_1$; $y_2$), wherein the masked table ($T$ (28)) and the at least one other map ($T_2$; $T_1$) are being evaluated,
   **characterised in that**
   - in the computation of each entry ($y := T(x)$) in the masked table ($T$(28)), at least one input value of one of the predefined maps ($T_1$; $T_2$) is determined depending on at least one result value of another of the predefined maps ($T_2$; $T_1$).

2. Method according to claim 1, **characterised in that** all of the predefined maps ($T_1$, $T_2$) are composed one after the other in the computation of each entry ($y$) in the masked table ($T$ (28)).

3. Method according to claim 1 or claim 2, **characterised in that**, in the computation of the masked result value ($y_1$; $y_2$), the at least one other map ($T_2$; $T_1$) is evaluated in an inverted direction ($T_2^{-1}$; $T_1^{-1}$) relative to the computation of the entry used of the masked table ($T$ (28)) in order to reverse the application of this map ($T_2$; $T_1$) in the computation of this table entry.

4. Method according to claim 3, **characterised in that**, in the computation of the masked result value ($y_1$; $y_2$), the first predefined map ($T_1$; $T_2$) is not evaluated.

5. Method according to any one of the claims 1 to 4, **characterised in that** the predefined maps ($T_1$, $T_2$) are predefined for unmasked input and result values.

6. Method according to any one of the claims 1 to 5, **characterised in that** the predefined maps ($T_1$, $T_2$) are invertible.

7. Method according to claim 6, **characterised in that** inverses ($T_2^{-1}$; $T_1^{-1}$) of the predefined maps ($T_1$, $T_2$) are at least partially defined in each case by one table (24, 26) located in a read-only memory (18).

8. Method according to claim 7, **characterised in that** at least one of the tables (24, 26) includes padding data.

9. Method according to any one of the claims 1 to 8, **characterised in that** the masked table ($T$ (28)) is written into a working memory (20).

10. Method according to any one of the claims 1 to 9, **characterised in that** the method is adapted to be executed by a processor (12) of a portable data carrier (10).

11. Method according to any one of the claims 1 to 10, **characterised in that** the method serves for protection against the spying out of data by means of side channel attacks.

12. Method according to any one of the claims 1 to 11, **characterised in that** the computation of the entries ($y := T(x)$) in the masked table ($T$ (28)) for all admissible index values ($x$) of the masked table ($T$ (28)) and for predefined permutations ($\rho_i$, $\sigma_i$) for masking input values or result values, respectively, is carried out in accordance with one of the following equations:

$$T(x) := y \ \text{ with } \ y = \sigma_2(T_2(\rho_2^{-1}(\sigma_1(T_1(\rho_1^{-1}(x))))))$$

and/ or

$$T(x) := y \ \text{ with } \ y = \sigma_2(T_2(\sigma_1(T_1(\rho_1^{-1}(x))))).$$

13. Method according to claim 12, **characterised in that** the computation of the masked result value ($y_1$; $y_2$) from the masked input value ($x_1$; $x_2$) is carried out in accordance with one of the following equations:

$$y_1 = \rho_2(T_2^{-1}(\sigma_2^{-1}(T(x_1))))$$

and/or

$$y_2 = T(\rho_1(T_1^{-1}(\sigma_1^{-1}(x_2))))$$

and/or

$$y_1 = T_2^{-1}(\sigma_2^{-1}(T(x_1)))$$

and/or

$$y_2 = T(\rho_1(T_1^{-1}(x_2))).$$

14. Computer program product, comprising a plurality of program instructions causing at least one processor (12) to execute a method according to any one of the claims 1 to 13.

**15.** Device, in particular a portable data carrier (10), comprising at least one processor (12) and at least one memory (14), wherein the device is adapted to carry out a method according to any one of the claims 1 to 13.

## Revendications

**1.** Procédé pour calculer de façon protégée de l'espionnage une valeur de résultat ($y_1$; $y_2$) masquée à partir d'une valeur d'entrée ($x_1$; $x_2$) masquée selon une première application ($T_1$; $T_2$) prédéfinie, au moins une autre application ($T_2$; $T_1$) étant prédéfinie, comprenant les étapes suivantes :

- calcul d'un tableau ($T$ (28)) masqué, toutes les applications ($T_1$, $T_2$; $T_2$, $T_1$) prédéfinies étant intégrées dans chaque enregistrement de tableau, et
- calcul de la valeur de résultat ($y_1$; $y_2$) masquée, le tableau ($T$ (28)) masqué et la au moins une autre application ($T_2$; $T_1$) étant évalués,
**caractérisé en ce que**,
- lors du calcul de chaque enregistrement (y=:$T$(x)) dans le tableau ($T$ (28)) masqué, au moins une valeur d'entrée de l'une des applications ($T_1$ ; $T_2$) prédéfinies est déterminée en fonction d'au moins une valeur de résultat d'une autre des applications ($T_2$; $T_1$) prédéfinies.

**2.** Procédé selon la revendication 1, **caractérisé en ce que**, lors du calcul de chaque enregistrement (y) dans le tableau ($T$ (28)) masqué, toutes les applications ($T_1$; $T_2$) prédéfinies sont reliées en série.

**3.** Procédé selon la revendication 1 ou la revendication 2, **caractérisé en ce que**, lors du calcul de la valeur de résultat ($y_1$ ; $y_2$) masquée, la au moins une autre application ($T_2$; $T_1$) est analysée dans une direction ($T_2^{-1}$; $T_1^{-1}$) inversée par rapport au calcul de l'enregistrement utilisé du tableau ($T$ (28)) masqué, afin d'annuler l'application de cette application ($T_2$; $T_1$) lors du calcul de cet enregistrement de tableau.

**4.** Procédé selon la revendication 3, **caractérisé en ce que**, lors du calcul de la valeur de résultat ($y_1$; $y_2$) masquée, la première application ($T_1$ ; $T_2$) prédéfinie n'est pas analysée.

**5.** Procédé selon l'une quelconque des revendications 1 à 4, **caractérisé en ce que** les applications ($T_1$; $T_2$) prédéfinies sont prédéfinies pour des valeurs d'entrée et de résultat non masquées.

**6.** Procédé selon l'une quelconque des revendications 1 à 5, **caractérisé en ce que** les applications ($T_1$ ; $T_2$) prédéfinies sont réversibles.

**7.** Procédé selon la revendication 6, **caractérisé en ce que** des inversions ($T_2^{-1}$; $T_1^{-1}$) des applications ($T_1$ ; $T_2$) prédéfinies sont définies au moins en partie par respectivement un tableau (24, 26) se trouvant dans une mémoire morte (18).

**8.** Procédé selon la revendication 7, **caractérisé en ce qu'**au moins l'un des tableaux (24, 26) présente des données vides (padding).

**9.** Procédé selon l'une quelconque des revendications 1 à 8, **caractérisé en ce que** le tableau ($T$ (28)) masqué est enregistré dans une mémoire vive (20).

**10.** Procédé selon l'une quelconque des revendications 1 à 9, **caractérisé en ce que** le procédé est conçu pour être mis en oeuvre par un processeur (12) d'un support de données (10) portable.

**11.** Procédé selon l'une quelconque des revendications 1 à 10, **caractérisé en ce que** le procédé sert à la protection contre un espionnage de données par des attaques de canal secondaire (Side Channel Attacks).

**12.** Procédé selon l'une quelconque des revendications 1 à 11, **caractérisé en ce que** le calcul des enregistrements (y=:$T$(x)) dans le tableau ($T$ (28)) masqué pour toutes les valeurs d'indice (x) autorisées du tableau ($T$ (28)) masqué et pour des permutations ($\rho_i$, $\sigma_i$) prédéfinies pour le masquage de valeurs d'entrée ou de valeurs de résultat s'effectue selon l'une des équations suivantes :

$$T(x) := y \quad \text{avec} \quad y = \sigma_2(T_2(\rho_2^{-1}(\sigma_1(T_1(\rho_1^{-1}(x))))))$$

et/ou

$$T(x) := y \quad \text{avec} \quad y = \sigma_2(T_2(\sigma_1(T_1(\rho_1^{-1}(x))))) \; .$$

**13.** Procédé selon la revendication 12, **caractérisé en ce que** le calcul de la valeur de résultat ($y_1$ ; $y_2$) masquée à partir de la valeur d'entrée ($x_1$; $x_2$) masquée s'effectue selon l'une des équations suivantes :

$$y_1 = \rho_2(T_2^{-1}(\sigma_2^{-1}(T(x_1))))$$

et/ou

$$y_2 = T(\rho_1(T_1^{-1}(\sigma_1^{-1}(x_2))))$$

et/ ou

$$y_1 = T_2^{-1}(\sigma_2^{-1}(T(x_1)))$$

et/ ou

$$y_2 = T(\rho_1(T_1^{-1}(x_2))) \; .$$

**14.** Produit de programme informatique comprenant une pluralité d'instructions de programme, qui ordonnent à au moins un processeur (12) de mettre en oeuvre un procédé selon l'une quelconque des revendications 1 à 13.

**15.** Dispositif, en particulier support de données (10) portable, comprenant au moins un processeur (12) et au moins une mémoire (14), le dispositif étant aménagé pour mettre en oeuvre un procédé selon l'une quelconque des revendications 1 à 13.

Fig. 1

Fig. 2

$(r \oplus r_1)$　　　　　t　　　　$(s \oplus s_1)$

$x_1 \rightarrow \oplus \rightarrow \boxed{T} \rightarrow \oplus \rightarrow \boxed{T_2^{-1}} \rightarrow \oplus \rightarrow y_1$

28　　　　　　26

## Fig. 3

$(r_2 \oplus s)$　　　　　r　　　　$(s_2 \oplus t)$

$x_2 \rightarrow \oplus \rightarrow \boxed{T_1^{-1}} \rightarrow \oplus \rightarrow \boxed{T} \rightarrow \oplus \rightarrow y_2$

24　　　　　　28

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19822217 A1
- WO 03017067 A2
- DE 102004032893 A1